# EUROPÄISCHE PATENTANMELDUNG

(11) **EP 2 939 725 A1**
(43) Veröffentlichungstag der Anmeldung: **04.11.2015**
(21) Anmeldenummer: 15160328.9
(22) Anmeldetag: 23.03.2015
(51) Int. Cl.: B01D 46/00, B01D 46/10, B01D 46/12, B01D 53/04

(54) **INNENRAUMLUFTFILTERELEMENT**

(30) Priorität: 25.03.2014 DE 102014004220
(71) Anmelder: MANN + HUMMEL GMBH, 71638 Ludwigsburg (DE)
(72) Erfinder: Unger, Ina, 71282 Hemmingen (DE); Luley, Oliver, 67346 Speyer (DE)
(74) Vertreter: Seyboth, Matthias

(57) **Zusammenfassung**

Die Erfindung betrifft ein Innenraumluftfilterelement für einen Innenraumluftfilter für die Fahrerkabine von Land- und Arbeitsmaschinen, insbesondere mit Spritz- oder Sprühvorrichtungen für Pflanzenschutz- oder Düngemittel, umfassend einen Filterrahmen, eine Vorfilterlage, eine Adsorptionsfilterlage, eine Feinfilterlage insbesondere zur Abscheidung von Aerosolen, wobei die Filterlagen im Wesentlichen entlang einer Strömungsrichtung durchströmt werden.

Das erfindungsgemäße Innenraumluftfilterelement ist dadurch gekennzeichnet, dass der Filterelementrahmen einen ersten Bereich mit einer ersten effektiven Querschnittsfläche senkrecht zur Strömungsrichtung und einen zweiten Bereich mit einer zweiten effektiven Querschnittsfläche senkrecht zur Strömungsrichtung sowie eine umlaufende Dichtung zur Trennung der Rohseite von der Reinseite im eingebauten Zustand aufweist, wobei der erste Bereich stromaufwärts der Dichtung und der zweite Bereich stromabwärts der Dichtung angeordnet sind und die zweite effektive Querschnittsfläche nur einen Teil der ersten effektiven Querschnittsfläche beträgt.

## Beschreibung

Die Erfindung betrifft ein Innenraumluftfilterelement für einen Innenraumluftfilter für die einer Fahrerkabine zugeführte Luft in Fahrzeugen, Landmaschinen, Baumaschinen und Arbeitsmaschinen.

Als Filterelement oder Filtereinsatz werden im Allgemeinen als Einheit auswechselbar in einem Filtergehäuse anordenbare Einsätze verstanden, die mindestens ein Filtermedium und üblicherweise auch eine das Filtermedium tragende oder stützende Struktur und meist eine Dichtung umfassen. Das Filtermedium weist üblicherweise eine begrenzte Standzeit auf. Aufgrund dessen müssen Filterelemente regelmäßig als Einheit ausgetauscht werden.

Die in eine Fahrzeugkabine strömende Luft wird heutzutage möglichst vollständig von Verunreinigungen befreit. Mögliche auftretende Verunreinigungen sind beispielsweise Feinstaub, Pollen, Ruß oder Aerosole. Insbesondere bei Anwendungen, bei welchen hohe Konzentrationen an Pflanzenschutzmitteln oder Flüssigdüngemitteln in der Umgebungsluft bei Verwendung von Sprühgeräten für diese Stoffe auftreten, ist das Filtern derartiger Verunreinigungen wichtig. Es stehen hierfür verschiedene Filtermittel zur Verfügung. Regelmäßig werden beispielsweise Partikelfilter, Aktivkohlefilter und HEPA-Filter eingesetzt. Diese werden in verschiedenen Lagen und verschiedenen Anordnungen kombiniert, um die gewünschte Filterwirkung für die Innenraumluft zu erzielen.

Die immer intensivere Integration verschiedener Bauelemente im Maschinenbereich und der Wunsch nach längeren Filterstandzeiten führen bei der Anordnung und dem Aufbau von Innenraumluftfiltern zu Zielkonflikten. Für eine hohe Integration sind eine sehr kompakte Bauweise und ein möglichst geringes Filtervolumen von Vorteil. Längere Standzeiten hingegen bedingen in der Regel größere Filtervolumina.

Es ist eine Aufgabe der Erfindung, ein Innenraumluftfilterelement für einen Innenraumluftfilter bereitzustellen, das die gewünschte Filterwirkung für Stäube, Aerosole und Gase bereitstellt, eine ausreichend lange Standzeit besitzt und gleichzeitig eine besonders gute Integrationsfähigkeit bietet.

Diese Aufgabe wird durch ein Innenraumluftfilterelement gemäß Anspruch 1 gelöst. Weitere Ausführungsformen der Erfindung sind in den abhängigen Ansprüchen angegeben.

Das erfindungsgemäße Innenraumluftfilterelement ist ein austauschbares Filterelement für einen Innenraumluftfilter für eine Fahrerkabine von Land- und Arbeitsmaschinen, insbesondere mit Spritz- oder Sprühvorrichtungen für Pflanzenschutzoder Düngemittel und ist in ein fahrzeugfestes Filtergehäuse einbaubar. Das Innenraumluftfilterelement umfasst eine Vorfilterlage, eine Adsorptionsfilterlage, eine Feinfilterlage insbesondere zur Abscheidung von Aerosolen sowie einen Filterelementrahmen. Der Filterelementrahmen legt durch seine Geometrie eine Strömungsrichtung fest, entlang derer die angesaugte Luft die genannten Filterlagen durchströmt.

Erfindungsgemäß ist vorgesehen, dass der Filterelementrahmen zwei Bereiche aufweist. In dem ersten Bereich des Filterelementrahmens ist eine erste effektive Querschnittsfläche hinsichtlich der Durchströmung der angesaugten Luft durch die Filterlagen vorgesehen. In dem zweiten Bereich ist eine entsprechende zweite effektive Querschnittsfläche vorgesehen. Unter effektiver Querschnittsfläche wird hierbei die Größe einer Fläche verstanden, die senkrecht zur Strömungsrichtung angeordnet ist und der strömenden Luft zur Durchströmung der jeweiligen Filterlage zur Verfügung steht. Ferner ist eine umlaufende Dichtung vorgesehen. Die umlaufende Dichtung dient zur Trennung der Rohseite des Innenraumluftfilterelements von der Reinseite, wenn das Innenraumluftfilterelement im Filtergehäuse des Innenraumluftfilters eingebaut ist. Die umlaufende Dichtung ist bevorzugt elastisch verformbar ausgebildet, beispielsweise aus einem Elastomer, Gummi, geschäumtem Polyurethan oder ähnlichem. Der erste Bereich ist bevorzugt bezüglich der Dichtung geometrisch stromaufwärts angeordnet, der zweite Bereich ist bevorzugt hinsichtlich der Dichtung geometrisch stromabwärts angeordnet. Die zweite effektive Querschnittsfläche beträgt lediglich einen Bruchteil der ersten effektiven Querschnittsfläche. Es ergibt sich somit, dass der (den) in dem zweiten Bereich angeordneten Filterlage(n) eine kleinere effektive Querschnittsfläche zur Verfügung steht. Es ist somit ein Querschnittssprung zwischen erstem und zweitem Bereich gebildet. Dies bedingt in der Regel, dass der Umfang des Filterelementrahmens in dem zweiten Bereich kleiner ist als in dem ersten Bereich. Bevorzugt liegt der Umfang des zweiten Bereichs in Strömungsrichtung gesehen insbesondere vollständig innerhalb des Umfangs des ersten Bereichs. Durch diese Nachschaltung eines zweiten Bereichs nach der Dichtungsebene können Bauräume erschlossen werden, die anderweitig nicht genützt oder verfügbar wären. Zwar ist die erfindungsgemäße Querschnittsverringerung generell nicht erwünscht, da dies eine größere Höhe des entsprechenden Filterabschnitts bedingt. Andererseits erlaubt es diese erfinderische Maßnahme, den nach der Dichtungsebene befindlichen Strömungsraum baulich für Filtermedien zu erschließen und somit eine höhere Integration bei gleichzeitig erhöhtem Filtervolumen zu erzielen.

Eine beispielhafte Ausführungsform der Erfindung sieht vor, dass in dem ersten Bereich die Vorfilterlage und die Adsorptionsfilterlage angeordnet sind. In dem zweiten Bereich ist die Feinfilterlage angeordnet. Alternativ kann vorgesehen sein, dass der erste Bereich die Vorfilterlage, die Feinfilterlage und eine erste Adsorptionsfilterlage birgt. Eine zweite Adsorptionsfilterlage ist in dem zweiten Bereich angeordnet. Die Aufteilung des Adsorptionsfilters in zwei separate Lagen und die Anordnung der zweiten Lage in einen der Dichtungsebene stromabwärts gelegenen Bereich des Innenraumluftfilterelements stellt eine bauliche Alternative dar, falls eine bestimmte Reihenfolge der Filterlagen gewünscht ist. Die Aufteilung des Adsorptionsfiltermediums ist in der Regel erforderlich, da das Adsorptionsfiltermedium das größte Volumen verglichen mit dem Vorfilter- und Feinfiltermedien einnimmt.

Die Vorfilterlage kann bei einer erfindungsgemäßen Ausführungsform als Partikelfilterlage, beispielsweise als Flachfilter oder als Vorfilterschaum, ausgeführt sein. In einer Ausführungsform kann als Vorfilterlage ein ungefaltetes oder zickzackförmig gefaltetes Filtermedium verwendet werden. Dies kann beispielsweise aus Zellulose, Kunststoffschaum oder Vlies bestehen oder eine ein- oder mehrlagige Kombination aus Lagen derartiger Filtermedien umfassen.

Eine Kunststoffschaum-Filtermedienlage für die Vorfilterlage kann beispielsweise aus einem retikulierten Schaum, insbesondere Polyurethanschaum, beispielsweise auf Polyether- oder Polyesterbasis bestehen oder eine oder mehrere Lagen dieses Schaums umfassen. Raumgewichte derartiger Schäume können im Bereich von 20 - 70 kg pro m³ betragen.

Als Zellulose-Filtermedium für die Vorfilterlage kann beispielsweise ein Zellulose-Filtermedium mit Epoxidimprägnierung zum Einsatz kommen. Bevorzugt weist das Zellulose-Filtermedium ein Flächengewicht von 80 - 140 g/m², bevorzugt 100 - 120 g/m² auf. In einer bevorzugten Ausführungsform weist das Medium eine maximale Porengröße im Bereich von 30 - 40 µm und/oder eine Luftdurchlässigkeit von ca. 100 - 400 l/m²s, bevorzugt zwischen 200 und 300 l/m²s auf, jeweils gemessen bei einer Druckdifferenz von 200 Pa (gemessen hier und im Folgenden bevorzugt nach DIN EN ISO 9237). Auf diese Weise können die nachfolgenden Lagen vor Staubablagerung geschützt und damit deren Funktion gesichert werden. In einer Ausführung beträgt der Imprägniergehalt, d.h. der Gewichtsanteil des Imprägniermittels am Flächengewicht des Filtermediums zwischen 15 und 30%.

Als Vlies-Filtermedium für die Vorfilterlage kann bevorzugt eine Kombination einer Spinnvlieslage und einer Meltblown-Lage (Vlies aus schmelzgeblasenen Kunststofffasern) verwendet werden. Beide Lagen können jeweils aus Polyamid (PA), Polyester (PES) oder Polypropylen (PP) hergestellt sein. Das Vlies-Filtermedium weist bevorzugt ein Flächengewicht zwischen 60 und 140 g/m², bevorzugt zwischen 80 und 120 g/m² und/oder eine Dicke im Bereich von 0,5 - 1 mm, besonders bevorzugt von 0,5 - 0,8 mm auf. Weiter bevorzugt liegt die Luftdurchlässigkeit im Bereich von 1000 - 2000 l/m²s, besonders bevorzugt zwischen 1200 und 1800 l/m²s bei einer Druckdifferenz von 200 Pa.

In einer Ausführungsform weist die Vorfilterlage insbesondere nach ISO 5011 einen Abscheidegrad von 99% für Prüfstaub PTI fein insbesondere nach ISO 14269-4 auf.

Die Vorfilterlage weist in einer bevorzugten Ausführungsform eine Flächenmasse von 75 - 125 g/m² auf. Bevorzugt weist das Filtermedium der Vorfilterlage eine Luftdurchlässigkeit von 100 - 200 l/m²s bei einer Druckdifferenz von 200 Pa auf.

Durch die Verwendung der Vorfilterlage kann erreicht werden, dass die Adsorptionslage und die Feinfilterlage vor zu großer Staubbeladung geschützt werden. Dadurch wird deren Funktion (Gasabscheidung der Adsorptionslage und Aerosolabscheidung der Feinfilterlage) auch bei sehr staubbeladener Ansaugluft in möglichst geringem Maße beeinträchtigt.

Die Adsorptionsfilterlage kann als Filtermedium Aktivkohle, beispielsweise als Aktivkohlebalg, aufweisen.

Die verwendete Aktivkohle kann beispielsweise aus Holz oder Steinkohle gewonnen, polymerbasiert, teerbasiert oder kokosnussschalenbasiert sein. In einer bevorzugten Ausführungsform werden als Grundstoff für die Aktivkohle lonenaustauscherkügelchen verwendet, die auf Polymerbasis, beispielsweise aus Kunstharzen, insbesondere aus mit Divinylbenzen vernetztem Polystyren hergestellt sind.

In einer Ausführungsform wird als Aktivkohle eine hydrophobe Aktivkohle verwendet. Als hydrophobe Aktivkohlen werden insbesondere solche verstanden, die eine vergleichsweise geringe Wasseraufnahmekapazität aufweisen. Bevorzugt wird eine Aktivkohle verwendet, welche bei einer relativen Luftfeuchte von 50% eine Wasseraufnahme von <10 Massenprozent, insbesondere bezogen auf den Adsorptionsast der Isotherme aufweist. Besonders bevorzugt beträgt diese Wasseraufnahme <5 Massenprozent.

In einer Ausführungsform weist die Aktivkohle eine BET-Oberfläche von größer 400 m²/g auf, vorteilhaft größer 600 m²/g auf, bevorzugt größer 800 m²/g, besonders bevorzugt größer 1000 m²/g (bevorzugt gemessen nach DIN ISO 9277:2003-05). Dadurch kann auf kleinem Bauraum eine ausreichende Adsorption sichergestellt werden.

In einer Ausführungsform wird Aktivkohle in schütt- oder rieselfähiger Form, beispielsweise in Form von körner- oder kugelartiger oder anderweitig geformter Partikel verwendet. Die Aktivkohlepartikel weisen bevorzugt Aktivkohlepartikelgrößen (mittlere Durchmesser) zwischen 0,1 und 1 mm, bevorzugt 0,2 bis 0,7 mm auf und können beispielsweise in der Form von Granulat-Aktivkohle oder Kugel-Aktivkohle vorliegen.

Für die Adsorptionsfilterlage kann beispielsweise ein offenporiger Schaum mit rieselfähiger Aktivkohle verwendet werden. Dabei kommen beispielsweise retikulierte Schäume z. B. aus Kunststoffen wie Polyurethan, Polyurethan-Ether oder Polyurethan-Ester zum Einsatz. Bevorzugt betragen die Porengrößen des Schaumes zwischen 20 und 50 ppi (pores per inch) oder zwischen 0,5 und 2 Poren pro Millimeter. Gemessen wird in einem vergleichenden optischen Verfahren, wobei unter dem Mikroskop eine vollständig ausgebildete Pore als "Standardpore" definiert und über einen Streckenabschnitt die dort auftretenden Poren mit dieser verglichen und ausgezählt werden. Poren, die im Vergleich zur Standardpore nicht vollständig ausgebildet sind, werden anteilig gezählt. In diesem Schaum sind bevorzugt Aktivkohlepartikel eingebracht und vorzugsweise fixiert. Die Aktivkohlepartikel sind dabei vorzugsweise mittels eines Klebstoffes, beispielsweise mittels eines Zweikomponentenklebstoffs auf Polyurethanbasis, in dem Schaum fixiert. Dies kann beispielsweise dadurch erreicht werden, dass der Schaum zuerst mit einem Klebstoff getränkt wird und anschließend bevor der Klebstoff trocknet oder aushärtet Aktivkohlepartikel insbesondere unter Rütteln eingerieselt werden. Hierbei kann ein Zweikomponentenklebstoff, ein Schmelzklebstoff oder ein wässriger Klebstoff zum Einsatz kommen.

In einer Ausführungsform ist als Adsorptionsfilterlage eine Lage einer fixierten Schüttung mit Aktivkohle verwendet. Diese kann in einem einlagigen oder mehrlagigen Aufbau realisiert werden. Als fixierte Schüttung wird eine Anordnung bezeichnet, in welcher eine Trägerschicht vorgesehen ist und auf dieser eine Schüttlage von Aktivkohlepartikeln fixiert ist. Die Als Trägerschicht kann beispielsweise ein Kunststoffstreckgitter oder eine Lage eines flächigen Materials, z.B. eines Partikelfiltermediums verwendet werden. In einer bevorzugten Ausführungsform kommt wird als Trägerschicht ein Vlies aus spinngebundenen oder schmelzgeblasenen Polyesterfasern, beispielsweise PET-Fasern (Polyethylenterephthalat) oder PBT-Fasern (Polybutylenterephtalat) verwendet. Dies kann ein Flächengewicht von 25 - 120 g/m², bevorzugt 50 - 100 g/m², besonders bevorzugt 65 - 85 g/m² und eine Luftdurchlässigkeit >3000 l/m²s, bevorzugt >5000 l/m²s bei einer Druckdifferenz von 200 Pa aufweisen. Gemessen wird die Luftdurchlässigkeit insbesondere nach ISO 9347. Die Schüttlage aus Aktivkohlepartikeln wird auf die Trägerschicht aufgebracht und bevorzugt mittels eines feinen Klebstoffauftrags auf der Trägerschicht fixiert. Dies erfolgt beispielsweise in Form einer Vielzahl von auf der Trägerschicht aufgebrachter Klebstoffpunkte oder mittels eines Netzes aus Klebstofffäden, die zwischen Trägerschicht und Schüttlage und/oder zwischen die Schüttlage während der Schüttung und/oder auf die Schüttlage aufgebracht ist. Die Schüttlage umfasst bevorzugt eine Auflage von 100 - 1200 g/m² Aktivkohlepartikel auf der Trägerschicht. Bevorzugt kommen zwischen 800 und 1000 g/m² zum Einsatz. Die Lage einer fixierten Schüttung mit Trägerlage und Schüttlage weist bevorzugt eine Luftdurchlässigkeit im Bereich von 800 - 1200 l/m²s, insbesondere zwischen 900 und 1100 l/m²s und ein Flächengewicht im Bereich von 850 bis 1250 g/m², insbesondere zwischen 950 und 1150 g/m² bei einer Lagendicke insbesondere im Bereich von 2 bis 6 mm auf.

Auf diese Weise wird eine stabile, gut zu verarbeitende und leistungsfähige Lage einer fixierten Schüttung bereitgestellt, die maschinell zu mehrlagigen Halbzeugen zusammengefasst werden kann.

In einer Ausführungsform wird für die Adsorptionsfilterlage ein ungefalteter oder zickzackförmig gefalteter Schichtaufbau aus einer Trägerschicht, einer Deckschicht und dazwischen eingebrachter, rieselfähiger Aktivkohle verwendet. Dadurch wird ein Halbzeug mit jeweils einer Träger- und Deckschicht und einer dazwischen angeordneten Schüttlage gebildet. Derartige Halbzeuge können wiederum zur Erhöhung der Filtrationsleistung mehrfach übereinander angeordnet werden, beispielsweise zwischen zwei und 20 Halbzeuge, bevorzugt zwischen 5 und 15 Halbzeuge.

Die Deckschicht kann direkt auf der Schüttlage angeordnet sein, und beispielsweise ein Kunststoffgitter oder eine Lage eines flächigen Materials, z.B. eines Partikelfiltermediums umfassen oder aus diesem bestehen. In einer bevorzugten Ausführungsform kommt wird als Deckschicht ein Vlies aus spinngebundenen oder schmelzgeblasenen Polyesterfasern verwendet. Dies kann ein Flächengewicht von 25 - 120 g/m², bevorzugt 50 - 100 g/m², besonders bevorzugt 65 - 85 g/m² und eine Luftdurchlässigkeit >3000 l/m²s, bevorzugt >5000 l/m²s aufweisen.

In einer Ausführungsform weist die Adsorptionsfilterlage einen Schichtaufbau aus mehreren fixierten Schüttungen auf. So kann beispielsweise eine erste Lage einer fixierten Schüttung mit der Seite, auf der die Aktivkohle angeordnet ist (Aktivkohleseite), auf die Aktivkohleseite einer zweiten Lage fixierter Schüttung gelegt und mit dieser beispielsweise durch Verkleben verbunden werden. Dadurch wird ein Halbzeug mit zwei Träger- oder Deckschichten und dazwischen angeordneter Schüttlage gebildet. Derartige Halbzeuge können wiederum zur Erhöhung der Filtrationsleistung mehrfach übereinander angeordnet werden, beispielsweise zwischen zwei und 10 Halbzeuge, bevorzugt zwischen 3 und 7 Halbzeuge. Alternativ oder in Kombination sind auch Anordnungen denkbar, bei welchen jeweils die Trägerlage einer Lage einer fixierten Schüttung auf die Aktivkohlelage einer anderen fixierten Schüttung aufgelegt ist. Diese Anordnung kann dann durch eine gewendete Lage mit fixierter Schüttung oder eine Deckschicht abgeschlossen werden. Beispielsweise können zwischen 4 und 20 Lagen einer fixierten Schüttung aufeinander angeordnet sein.

In einer Ausführungsform kann die gesamte Adsorptionsfilterlage einen zickzackförmig gefalteten Schichtaufbau bilden oder einzelne, übereinanderliegende, separat gefaltete oder ungefaltete Schichten aus Halbzeug oder Lagen von fixierter Schüttung umfassen.

Bevorzugt können mittels der dargestellten Varianten mehrere Adsorptionsfilterlagen in Schichtaufbau umfassend eine Trägerschicht, eine Deckschicht und dazwischen eingebrachte, rieselfähige Aktivkohle übereinander eine Gesamtadsorptionsfilterlage bilden. Es werden dabei insbesondere zwischen 2 und 30, bevorzugt zwischen 5 und 15 Lagen von Halbzeug oder von fixierter Schüttung zur Bildung der Gesamtadsorptionsfilterlage aufeinander angeordnet und optional mittels eines Verbindungsmittels, z.B. eines Seitenbandes aus Vlies oder Textil dichtend miteinander zu einem Adsorptionsteilfilter verbunden. Dabei kann das Seitenband mittels eines Klebstoffs mit den Lagen verbunden sein. Alternativ zum Seitenband kann ein insbesondere angeklebter, angespritzter oder angeschweißter Kunststoffrahmen oder eine mittels einer Gießform an die Lagen angegossene Vergussmasse, insbesondere Polyurethan, zur seitlichen Abdichtung verwendet werden.

In einer Ausführungsform weist die Adsorptionsfilterlage zwei Bereiche mit unterschiedlicher Aktivkohledichte auf. Dabei ist bevorzugt ein Bereich mit höherer Aktivkohledichte auf der Abströmseite und ein Bereich mit geringerer Aktivkohledichte auf der Anströmseite angeordnet. Dies kann beispielsweise dadurch erreicht werden, dass zwei Lagen von verschiedenen mit Aktivkohlepartikeln gefüllten Schäumen aufeinander gelegt sind, wobei die abströmseitige Lage einen höheren Füllgrad von Aktivkohle aufweist als die anströmseitige Lage. Alternativ kann wie oben in verschiedenen Varianten beschrieben ein Schichtaufbau von Lagen mit fixierten Schüttungen von Aktivkohlepartikeln eingesetzt werden, bei welchem eine oder mehrere abströmseitige Lagen oder Schichten, die insbesondere den Schichtaufbau zur Abströmseite hin abschließen, eine höhere Aktivkohledichte aufweisen. Dies kann beispielsweise dadurch erreicht werden, dass bei gleichen Materialien für Trägerschichten, Schüttlagen und Decklagen die abströmseitigen Lagen insbesondere vor, während oder nach dem Erhärten des Klebstoffes derart kalandriert werden, dass die Schichtdicke reduziert und damit die Aktivkohledichte erhöht wird. Es kann jedoch auch für die Lage(n) mit höherer Aktivkohledichte ein Aktivkohlegranulat verwendet werden, welches eine höhere Schüttdichte aufweist als das für die Lagen mit geringerer Dichte verwendete. Dies kann entweder durch Aktivkohlen mit unterschiedlicher spezifischer Dichte oder durch unterschiedliche Geometrien der Partikel realisiert werden. Dadurch wird insbesondere eine Sperrlage dargestellt, welche zuverlässig die Abscheidung von Restkonzentrationen von schädlichen Gasen ermöglichen kann. Dadurch kann eine zusätzliche Sicherheit für den Anwender bereitgestellt werden.

In einer bevorzugten Ausführungsform weist die Adsorptionsfilterlage einen abströmseitigen Bereich umfassend eine oder mehrere insbesondere kalandrierte Lagen von fixierter Schüttung auf. Diese Lage(n) weisen bevorzugt eine Auflage von Aktivkohle von 100 - 1200 g/m² Aktivkohlepartikel auf der Trägerschicht auf. Bevorzugt kommen zwischen 800 und 1000 g/m² zum Einsatz. Die Lage einer fixierten Schüttung mit Trägerlage und Schüttlage weist hierfür bevorzugt eine Luftdurchlässigkeit im Bereich von 800 - 1200 l/m²s, insbesondere zwischen 900 und 1100 l/m²s und ein Flächengewicht im Bereich von 850 bis 1250 g/m², insbesondere zwischen 950 und 1150 g/m² bei einer Lagendicke insbesondere im Bereich von 1 bis 3 mm auf. Besonders bevorzugt weisen diese Lagen oder diese Lage im abströmseitigen Bereich mit höherer Aktivkohledichte im Wesentlichen die gleiche Auflage von Aktivkohlepartikel in Bezug auf das Flächengewicht und/oder die Art der Aktivkohlepartikel auf wie die vorhergehenden, anströmseitigen Lagen mit geringerer Aktivkohledichte. Weiter bevorzugt weist diese Lage oder diese Lagen eine deutlich geringere Lagendicke auf als die vorhergehenden, anströmseitigen Lagen mit geringerer Aktivkohledichte. Die Lagendicke kann beispielsweise kleiner 2/3 der Dicke der vorhergehenden, anströmseitigen Lagen mit geringerer Aktivkohledichte betragen, bevorzugt zwischen 40% und 60% der Dicke der vorhergehenden, anströmseitigen Lagen. Dazu werden beispielsweise die Lage oder die Lagen mit höherer Aktivkohledichte durch einen Kalandrierschritt oder ein ähnliches Verfahren derart verdichtet, dass gegenüber der unbearbeiteten Schicht eine derartige Dickenreduktion erreicht wird. Auf diese Weise können die verschiedenen Bereiche mit unterschiedlicher Aktivkohledichte aus den gleichen Grundmaterialien hergestellt werden, wobei zur Erzeugung der Lagen mit höherer Aktivkohledichte nur ein zusätzlicher Kalandrierschritt erforderlich ist.

In einer bevorzugten Ausführungsform wird für die Lage oder die Lagen mit höherer Aktivkohledichte eine Schüttung aus Aktivkohlepartikeln verwendet, die im Vergleich zu den vorhergehenden, anströmseitigen Lagen mit geringerer Aktivkohledichte eine höhere Schüttdichte aufweist. Bevorzugt ist dabei die Schüttdichte im Vergleich zu den anströmseitigen Lagen mit geringerer Aktivkohledichte um 50%, besonders bevorzugt um 100% höher.

In einer besonders bevorzugten Ausführungsform wird für die Lage oder die Lagen mit höherer Aktivkohledichte eine Schüttung aus Aktivkohlepartikeln verwendet, die im Vergleich zu den vorhergehenden, anströmseitigen Lagen mit geringerer Aktivkohledichte einen geringeren mittleren Partikeldurchmesser, insbesondere einen um mindestens 50% geringeren mittleren Partikeldurchmesser, bevorzugt einen mindestens 65% geringeren mittleren Partikeldurchmesser aufweist.

In einer Ausführungsform weisen die anströmseitigen Lagen mit geringerer Aktivkohledichte Aktivkohlepartikel mit einem Partikeldurchmesser im Bereich von 0,7 bis 1,2 mm auf.

In einer Ausführungsform weisen die Lage oder die Lagen mit höherer Aktivkohledichte eine Schüttung aus Aktivkohlepartikeln mit Partikeldurchmesser im Bereich von 0,3 bis 0,7 mm auf.

Mit den beschriebenen Ausführungsformen der Adsorptionsfilterstufe wird insbesondere eine gleichmäßige Verteilung der Aktivkohle erreicht, die auch während des Betriebs beispielsweise unter Vibrationsbelastung gewährleistet ist. Auf diese Weise kann zur Bereitstellung eines zuverlässigen Filterelements beigetragen werden.

Mit einem erfindungsgemäßen Filtermedium für eine Adsorptionsfilterlage kann insbesondere ein Innenraumfilterelement mit einer Adsorptionsfilterlage bereitgestellt werden, die insbesondere gut verarbeitbar ist. Insbesondere kann ein Innenraumfilterelement bereitgestellt werden, das abströmseitig eine Prüfgaskonzentration unter 10 pg/g nach der Zyklohexan-Methode entsprechend EN 12941:1998 bei einer Prüfdauer von 70 min gemessen nach EN 15695-2:2009 erreicht.

Die Feinfilterlage kann als HEPA-Balg ausgestaltet sein. In einer Ausführungsform wird als Feinfilterlage ein ungefaltetes oder zickzackförmig gefaltetes Filtermedium mit Glasfasern in einer Glasfaserlage verwendet. Hierbei kann beispielsweise ein Glasfaservlies oder Glasfaserpapier verwendet werden. Dieses weist bevorzugt eine einseitig oder beidseitig kaschierte Deckschicht aus einem Spinnvlies auf. Dadurch wird insbesondere ein mechanischer Schutz des oft sehr empfindlichen Glasfasermediums erreicht. Dies ist insbesondere von Vorteil, wenn die Glasfaserlage gefaltet wird, da hierdurch insbesondere das Medium vor Beschädigungen beim Falten geschützt werden kann, welche zu lokalen Undichtigkeiten oder zu Rissen führen könnten. Ferner können derartige Deckschichten zur Verbesserung der mechanischen Festigkeit der Feinfilterlage dienen.

In einer Ausführungsform der Feinfilterlage weisen die Glasfasern einen Faserdurchmesser im Bereich von 800 nm bis 5 µm auf. Bevorzugt weisen 90 % der Fasern einen Faserdurchmesser innerhalb dieses Bereichs auf. Bevorzugt liegen Fasern mit Faserdurchmessern im Wesentlichen im ganzen Faserdurchmesserbereich vor. Bevorzugt liegt der mittlere Faserdurchmesser innerhalb des genannten Bereichs. Die Faserdurchmesser können beispielsweise nach den in DE 10 2009 043 273 A1 oder US 2011/0235867 A1 beschriebenen Verfahren gemessen sein. Bevorzugt weist das Filtermedium der Feinfilterlage eine Flächenmasse zwischen 60 und 100 g/m² auf, besonders bevorzugt zwischen 75 und 90 g/m². Die Glasfaserlage weist bevorzugt eine Dicke von 0,2 - 1 mm, besonders bevorzugt von 0,3 - 0,6 mm auf. Besonders bevorzugt wird eine Glasfaserlage verwendet, welche bei einer Anströmgeschwindigkeit von 7,5 cm/s einen Widerstand im Bereich von 300 - 600 Pa, bevorzugt zwischen 400 und 500 Pa erzeugt. Die Luftdurchlässigkeit (Permeabiliät) liegt bevorzugt im Bereich von 25 bis 45 l/m²s bei einem Druckverlust von 200 Pa. Der Druckverlust liegt bei einer Strömungsgeschwindigkeit von 5,3 cm/s bevorzugt im Bereich von 200 - 700 Pa, besonders bevorzugt zwischen 450 und 600 Pa oder alternativ zwischen 270 - 480 Pa. Die Porengröße kann bevorzugt im Bereich zwischen 5 und 12 µm, besonders bevorzugt zwischen 8 und 10 µm liegen.

In einer Ausführungsform sind die Spinnvliese der Deckschicht(en) insbesondere aus einem Polyester oder Polypropylen oder Polyamid als Werkstoff gebildet.

In einer Ausführungsform weisen die Spinnvliese der Deckschicht(en) Flächenmaßen Flächenmassen im Bereich von 10 und 250 g/m², bevorzugt 20 bis 60 g/m² und besonders bevorzugt 30-34 g/m²auf. Bevorzugte Schichtdicken für die Deckschichten liegen im Bereich von 0,1 bis 0,3 mm.

In einer Ausführungsform wird das Spinnvlies der Deckschichten aus Endlosfasern gebildet, die mittels temperierter Luft und/oder Galetten verstreckt und auf ein Transportband wirr abgelegt werden. Nachfolgen kann optional ein Kalanderprozess erfolgen zum Erzeugen eines Faserverbunds und/oder Beeinflussung der Vliesoberflächen.

Anstatt von Glasfasern können für die Feinfilterlage auch Kunststofffasern verwendet werden. In einem Ausführungsbeispiel wird ein solches synthetisches HEPA-Medium an Stelle der beschriebenen Glasfasermedien verwendet. Als Werkstoff kann dabei beispielsweise Polyester oder Polypropylen oder Polyamid verwendet werden, die Faserlagen sind dabei bevorzugt in Vliesform ausgebildet und beispielsweise im Elektrospinningverfahren, im Schmelzblasverfahren oder auf sonstige Weise hergestellt. Bevorzugt wird dabei ein Elektretmedium verwendet. Aufgrund der Stoffeigenschaften synthetischer Filtermedien kann vorteilhaft auf Deck und Schutzlagen verzichtet werden. Bevorzugt wird eine Lage aus schmelzgeblasenem Vlies aus Polyester mit einer Flächenmasse von beispielsweise 80 - 160 g/m², bevorzugt zwischen 80 und 120 g/m² und einer Dicke von beispielsweise ca. 0,4 bis 1 mm verwendet. Diese ist weiter bevorzugt auf eine Trägerlage aufgebracht. Als Trägerlage kommt beispielsweise ein Kunststoff-Stützgitter oder eine Spinnvlieslage in Betracht. Die weiteren Eigenschaften können denen der beschriebenen Feinfilterlagen mit Glasfasern entsprechen.

In einer Ausführungsform sind die Vorfilterlage und die Feinfilterlage in einem Filterbalg mit insbesondere unmittelbar aufeinanderliegenden Lagen eines Vorfiltermediums und eines Feinfiltermediums integriert.

In einer Ausführungsform ist eine Deckschicht nur einseitig auf die Glasfaserlage kaschiert, auf die andere Seite wird direkt das Vorfiltermedium auflaminiert. Diese Lagenkombination kann entweder flach in das Innenraumfilterelement integriert oder als gesamte Lagenkombination zickzackförmig gefaltet sein und einen Faltenbalg bilden. Auf diese Weise kann ein Innenraumluftfilterelement mit mehreren Filterstufen mit geringem Montageaufwand und auf kleinem Bauraum bereitgestellt werden.

Deckschichten und/oder Vorfilterlage können auf unterschiedliche Weise auf die Glasfaserlage aufgebracht sein. Hierbei kommen beispielsweise gesprühte Klebstoffe, beispielsweise in wässriger Suspension z.B. auf PU-Basis zum Einsatz. Alternativ können aufgesprühte, in Pulverauftragsverfahren oder aufgetragene Schmelzklebstoffe, beispielsweise in Form von Klebevliesen oder -gittern zwischen den Lagen zum Einsatz kommen, welche beim Kalandrieren in einem Fixierschritt aufschmelzen und anschließend aushärten und damit eine dauerhafte Verbindung herstellen. Damit kann insbesondere eine sichere Verbindung zwischen Glasfaserlage und Deckschichten hergestellt werden, die eine Faltung des Filtermediums erlaubt.

Mit einem erfindungsgemäßen Filtermedium für eine Feinfilterlage kann insbesondere ein Innenraumfilterelement mit einer Feinfilterlage bereitgestellt werden, die insbesondere gut zu einem Faltenbalg verarbeitbar ist. Insbesondere kann ein Innenraumfilterelement bereitgestellt werden, das eine Aerosol-Durchdringung von ≤ 0,05% gemessen nach EN 15695-2:2009 erreicht.

In dem erfindungsgemäßen Filterelement können Vorfilterlage und/oder die Adsorptionsfilterlage und/oder die Feinfilterlage jeweils ein separates Teilfilterelement bilden oder vollständig oder teilweise in Schichten aufeinanderfolgend miteinander verbunden sein.

In einer bevorzugten Ausführungsform weisen die Teilfilterelemente Vorfilterlage, Adsorptionsfilterlage und Feinfilterlage bevorzugt jeweils ein an den Schmalseiten umlaufendes Seitenband auf, welches mit der jeweiligen Teilfilterlage dichtend verbunden ist. Das Seitenband kann ein textiles oder aus Vlies gebildetes Seitenband sein.

Als Schmalseiten werden dabei bevorzugt die Seiten der Filterlage bezeichnet, die nicht durchströmt werden. Dabei umranden die Schmalseiten die Anström- und Abströmseiten bzw. -flächen. Bei einem Medienaufbau, der durch zickzackförmiges Falten eines Mediums gebildet ist, umfasst der Begriff Schmalseiten damit sowohl die durch den zickzackförmigen Verlauf zweier Ränder des Mediums gebildeten Flächen (Stirnseiten) als auch die parallel zu den Faltkanten verlaufenden Endflächen.

In einer Ausführungsform liegen die Vorfilterlage und/oder die Adsorptionsfilterlage und/oder die Feinfilterlage direkt aufeinander und sind als Einheit zickzackförmig gefaltet.

In einer Ausführungsform liegen die Teilfilterelemente zur Bildung des Innenraumfilterelements insbesondere unmittelbar aufeinander und sind mittels eines Rahmens miteinander dichtend verbunden, insbesondere mittels eines an der gemeinsamen Schmalseite umlaufenden Seitenbandes, insbesondere aus Vlies oder Textil, welches mit den Teilfilterelementen verschweißt oder verklebt sein kann.

Alternativ kann ein insbesondere spritzgegossener Kunststoffrahmen vorgesehen sein. Dieser kann entweder vorgefertigt sein und die Teilfilterelemente aufnehmen, die im Rahmen verklebt oder verschweißt werden. Alternativ kann der Rahmen als umspritzter Rahmen ausgebildet sein, der dadurch gebildet wird, dass die Teilfilterelemente in eine Form eingelegt und anschließend mit einem Spritzgussrahmen umspritzt werden, wobei das Material sich beim Aushärten unlösbar mit den Teilfilterelementen verbindet.

Weiter alternativ kann der Rahmen durch eine Vergussmasse aus Polyurethan (PUR) oder einem anderen gießfähigen Polymer gebildet sein, insbesondere aus einem aufgeschäumten Polyurethan, d.h. Polyurethanschaum.

Eine bevorzugte Ausführungsform der Erfindung sieht vor, dass der zweite Bereich des Filterelementrahmens derart ausgestaltet ist in einen stromabwärts angeordneten Ansaugluftkanal zu ragen. Auf diese Weise kann Bauraum für das Filtervolumen gewonnen werden, ohne die Funktion zu beeinträchtigen oder das Filtervolumen zu reduzieren.

Eine besonders bevorzugte Ausführungsform sieht vor, dass sich die beiden effektiven Querschnittsflächen hinsichtlich ihrer Längenausdehnung unterscheiden. Eine Längenausdehnung der zweiten effektiven Querschnittsfläche ist um mindestens die Wandstärke eines Luftkanalelements verglichen mit der entsprechenden Längenausdehnung der ersten effektiven Querschnittsfläche reduziert.

Eine Ausführungsform der Erfindung sieht vor, dass der Filterelementrahmen am Übergang von dem ersten Bereich zu dem zweiten Bereich stufenförmig ausgebildet ist. Die Stufe kann beispielsweise als äußere Anschlagsfläche beim Einbau des Innenraumluftfilterelements dienen. Gleichzeitig kann die Stufe im Innenbereich des Innenraumluftfilterelements zur baulichen Abgrenzung zweier Filterlagen dienen.

In diesem Zusammenhang kann in vorteilhafter Weise vorgesehen sein, dass die Dichtung an einer Kante im äußeren Bereich der der Stufe angeordnet ist. In einer Ausführungsform ist sie außerhalb der effektiven Querschnittsfläche des ersten Bereichs angeordnet. Somit kann die Stufe neben den genannten Anschlags- und Abgrenzungsfunktionen auch integral die Dichtung aufnehmen, ohne das durchströmte Volumen im ersten Bereich des Filtergehäuses zu beeinträchtigen.

In einer alternativen Ausführungsform ist die Dichtung im Bereich der Stufe innerhalb der effektiven Querschnittsfläche des ersten Bereichs angeordnet ist. Somit kann entweder an dem Innenraumluftfilterelement oder gehäuseseitig eine Dichtfläche ohne zusätzlichen seitlichen Raumbedarf vorgesehen werden. Diese Ausführungsform erlaubt besonders bei engen Bauraumverhältnissen eine besonders platzsparende Außenkonturführung. Die Dichtung kann entweder axial (d.h. hier in oder entgegen der Strömungsrichtung) oder radial (d.h. senkrecht zur Strömungsrichtung) ausgeführt sein, d.h., dass die Dichtfläche der Dichtung zur Anlage an einer gehäuseseitigen Gegendichtfläche in axialer oder radialer Richtung ausgelegt ist. Die Dichtung kann ferner außen am Filterelementrahmen an unterschiedlichen Positionen angeordnet sein. Eine Anordnung am vom zweiten Bereich abgewandten Ende des ersten Bereichs erlaubt eine in Strömungsrichtung entlang des Filterelementes eng anliegende Gehäusewandung und bietet somit Bauraumvorteile. Dies gilt ebenfalls für innerhalb des Querschnittes des ersten Bereichs angeordnete Dichtungen, die im Bereich der Stufe bzw. des Querschnittssprungs, der seitlichen Außenwandung des zweiten Bereichs oder axial um die Endfläche des zweiten Bereichs umlaufend angeordnet sind.

In einer Ausführungsform ist die Dichtung durch ein umlaufendes Dichtprofil aus einem Polymer, insbesondere aus einem angeschäumten, insbesondere geschlossenporigen Schaum, z.B. aus Polyurethanschaum, gebildet. Ist auch der Rahmen aus einem derartigen Material gebildet, kann die Dichtung mit dem Rahmen einstückig ausgebildet sein. Bevorzugt weist die Dichtung eine Härte im Bereich zwischen 5 und 45 Shore A, besonders bevorzugt von 13 +/- 4 Shore A auf.

In einer bevorzugten Ausführungsform ist die Dichtung zwischen zwei Gehäuseteilen eines Filtergehäuses axial oder radial dichtend verpressbar oder einspannbar.

Eine ebenfalls vorteilhafte Ausführungsform der Erfindung sieht vor, dass im Innenbereich der Stufe entweder eine gemeinsame Klebestelle zur Fixierung der im Innenbereich des Innenraumluftfilterelements angeordneten Filterlagen des ersten und zweiten Bereichs oder alternativ zwei nah aneinander angrenzende, voneinander getrennte Klebestellen vorgesehen sind. Auf diese Weise kann in einem oder in zwei direkt aufeinanderfolgenden Arbeitsschritten nach dem Einbringen der Filterlagen in dem zweiten Bereich die entsprechenden Klebestellen mit Klebstoff versehen werden, um nachfolgend die Filterlagen des ersten Bereichs einzubringen und zu fixieren.

Eine weitere vorteilhafte Ausführungsform der Erfindung sieht vor, dass Vorfilterlage, Adsorptionsfilterlage und Feinfilterlage jeweils dichtend und bevorzugt fest, d.h. unlösbar, insbesondere nicht zerstörungsfrei lösbar, mit dem Filterelementrahmen verbunden sind. Somit ist eine Auswechselbarkeit des Elements als Einheit und eine für die Verwendung bei schadstoffbelasteter Zuluft zuverlässige Abdichtung der einzelnen Filterstufen gewährleistet. Die Verbindung kann beispielsweise durch eine Verklebung oder Verschweißung der jeweiligen Filterlagen mit dem Filterelementrahmen erfolgen.

Das Filtergehäuse kann aufgrund einer Ausführungsform einteilig, insbesondere als Spritzgussteil, ausgeführt sein.

Die Erfindung wird nun unter Bezugnahme auf die Zeichnungen näher erläutert. Es zeigen:
- Figur 1: eine erste erfindungsgemäße Ausführungsform eines Innenraumluftfilterelements in perspektivischer Ansicht von oben im zerlegten Zustand;
- Figur 2: die erste Ausführungsform der Erfindung gemäß Figur 1 in perspektivischer Ansicht von unten;
- Figur 3: die erste Ausführungsform der Figuren 1 und 2 als Schnittansicht von oben im zusammengebauten Zustand;
- Figur 4: eine zweite Ausführungsform als Alternative zu der Ausführungsform der Figur 3;
- Figur 5: eine dritte Ausführungsform als Alternative zu der Ausführungsform der Figur 4;
- Figur 6: die erste Ausführungsform der Figuren 1 und 2 als Schnittansicht von unten im zusammengebauten Zustand;
- Fign. 7 - 9: eine Drauf-, Seiten- und perspektivische Ansicht der ersten Ausführungsform;
- Figur 10: eine Schnittansicht entlang der Linien A - A der Figur 7;
- Figur 11: eine Vergrößerung der Schnittansicht der Figur 10, und
- Fign. 12-16: Varianten von Dichtungsanordnungen für die beschriebenen Innenraumluftfilterelemente.

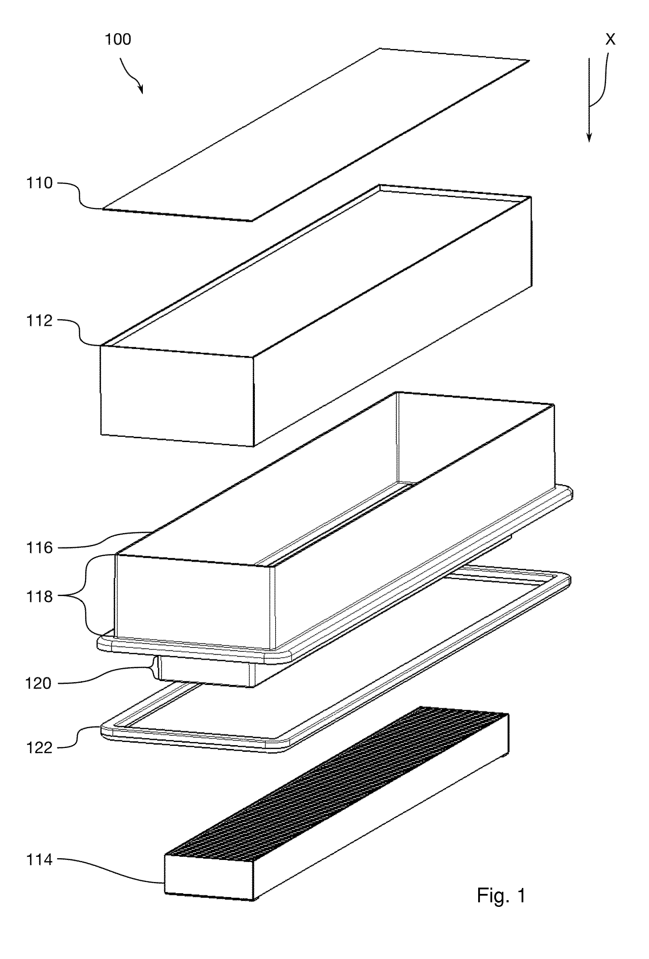

In Figur 1 ist ein Innenraumluftfilterelement 100 gemäß der vorliegenden Erfindung in einem zerlegten Zustand in einer perspektivischen Ansicht von oben dargestellt. Das Innenraumluftfilterelement 100 weist einen Filterelementrahmen 116 auf. Der Filterelementrahmen 116 wird entlang der Achse X durchströmt. Der Filterelementrahmen 116 lässt sich in einen ersten Bereich 118 und einen zweiten Bereich 120 unterteilen, die bevorzugt in Durchströmungsrichtung einen unterschiedlichen Querschnitt aufweisen. In dem ersten Bereich 118 befinden sich ein Partikelfilter 110 und ein Aktivkohlebalg 112. In dem zweiten Bereich 120 ist ein HEPA-Balg 114 angeordnet. Der Querschnittssprung zwischen erstem Bereich 118 und zweitem Bereich 120 ist von außen erkennbar. In der gezeigten Ausführungsform ist im Bereich des Querschnitts eine umlaufende Dichtung 122 angeordnet.

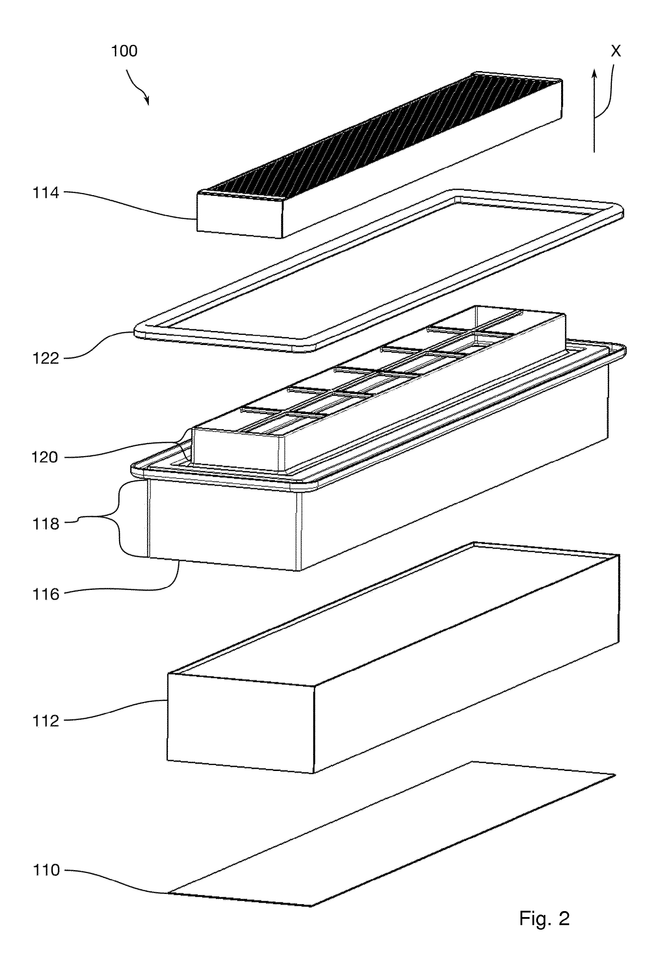

Figur 2 zeigt die gleiche Ausführungsform des Innenraumluftfilterelements 100 in einer perspektivischen Ansicht von unten.

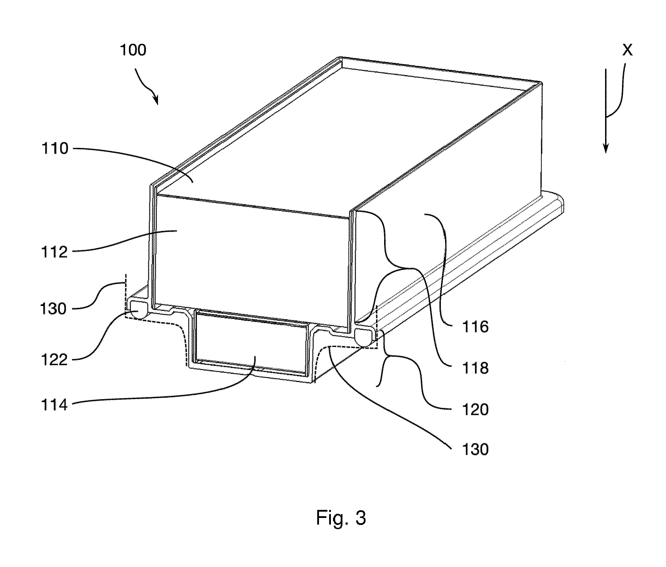

In Figur 3 ist das Innenraumluftfilterelement 100 im zusammengebauten Zustand in einer Schnittansicht gezeigt, die parallel zu der Achse X mittig durch das Innenraumfilterelement 100 verläuft. Wie in dieser Ansicht erkennbar ist, findet der HEPA-Balg 114 in dem zweiten Bereich 120 Aufnahme und der Partikelfilter 110 zusammen mit dem Aktivkohlebalg 112 werden in dem ersten Bereich 118 aufgenommen. Es ist ebenfalls schematisch und gestrichelt ein Luftkanal 130 skizziert, in den der zweite Bereich 120 des Filterelementrahmens 116 ragt.

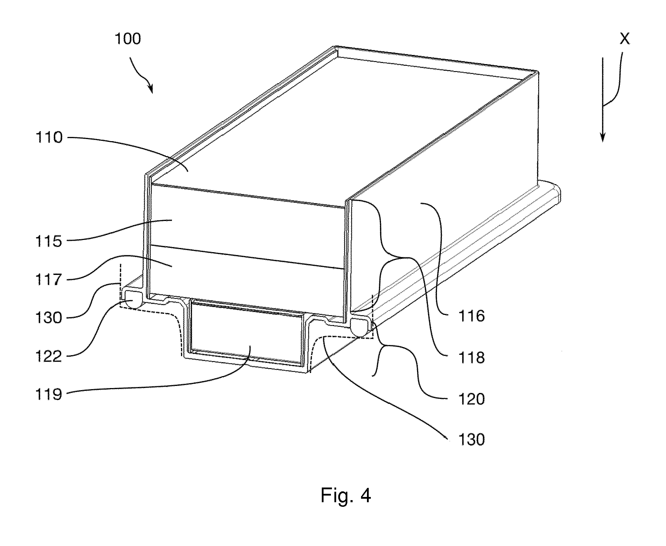

In Figur 4 ist eine zweite alternative Ausführungsform dargestellt, in der eine andere Aufteilung der Filterlagen vorgenommen wurde. Der HEPA-Balg ist nun als HEPA-Balg 115 dem Partikelfilter 110 direkt nachgeschaltet. Der Aktivkohlebalg ist aufgeteilt in einen ersten Aktivkohlebalg 117 und einen zweiten Aktivkohlebalg 119.

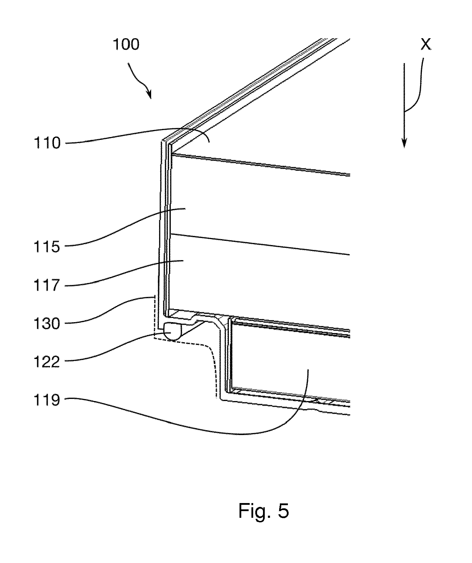

Figur 5 zeigt eine dritte alternative Ausführungsform, in der die Dichtung 122 eine alternative Position einnimmt. Die Dichtung befindet sich in Strömungsrichtung X gesehen unterhalb der Stufe innerhalb der effektiven Querschnittsfläche des ersten Bereichs 118.

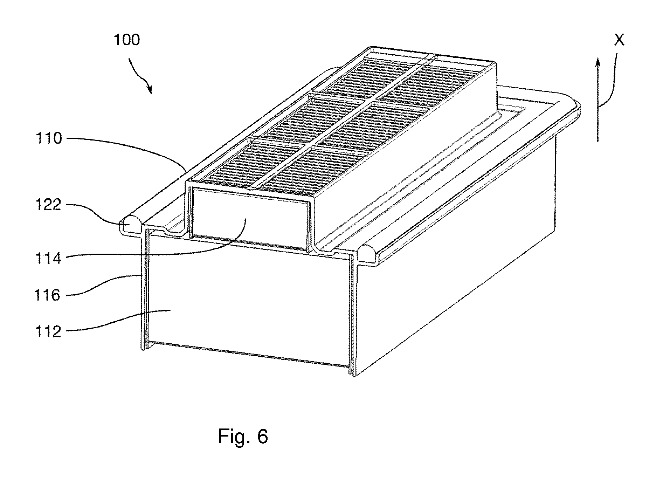

Figur 6 zeigt die erste Ausführungsform der Figur 2 im zusammengebauten Zustand.

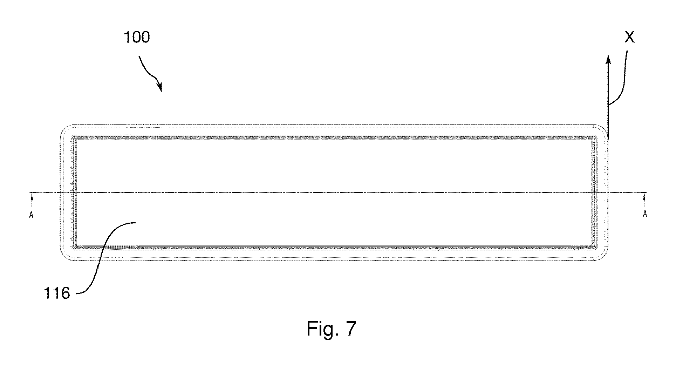

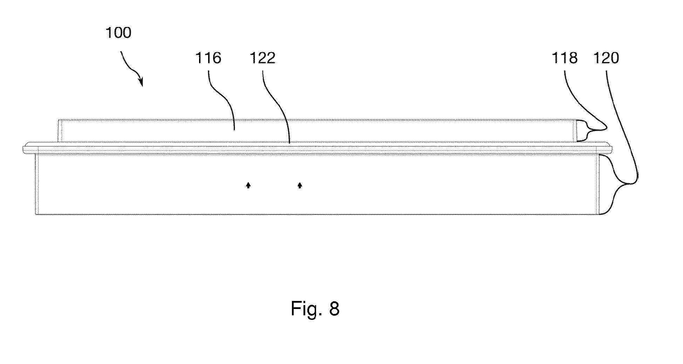

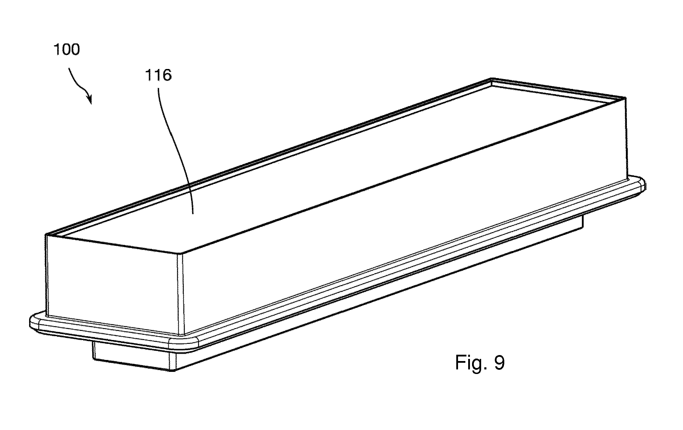

In den Figuren 7 - 9 sind eine Draufsicht, eine Seitenansicht sowie eine isometrische Perspektivansicht des Innenraumluftfilterelements 100 dargestellt. In Figur 7 ist eine Schnittachse A - A gezeigt.

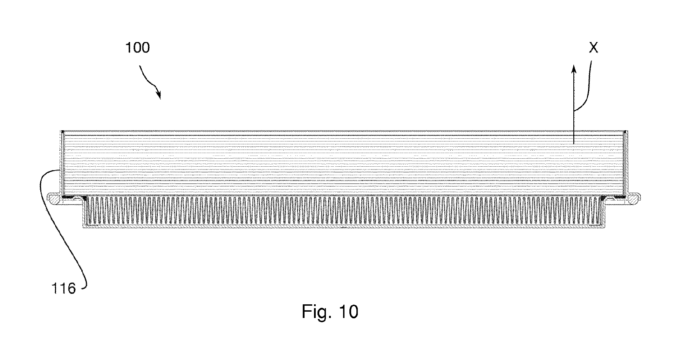

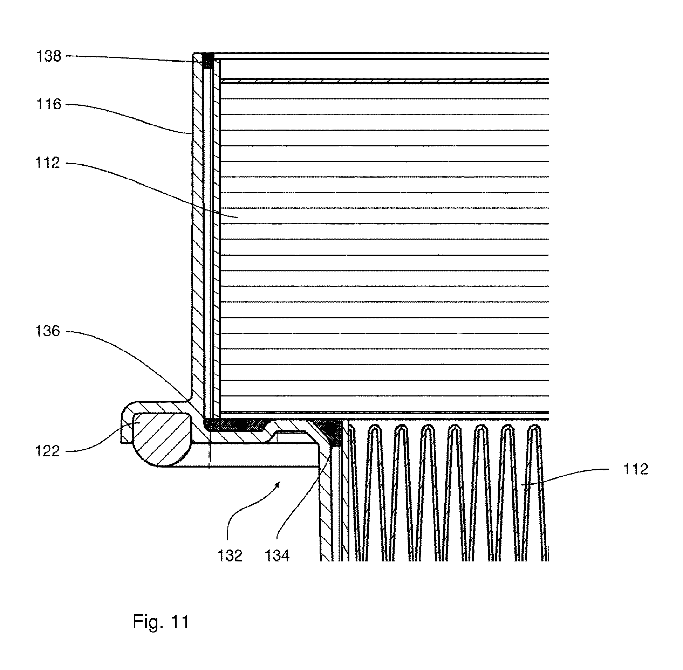

Figur 10 zeigt den entsprechenden Schnitt, Figur 11 eine Vergrößerung der Schnittansicht. In der Darstellung der Figur 10 sind Klebestellen erkennbar. Der HEPA-Balg 114 wird an der Stufe 132 mittels einer Klebestelle 134 befestigt. Genauer wird der HEPA-Balg 114 an der dem Innenraum des Innenraumluftfilterelements 100 zugewandten Seite der Stufe 132 mittels einer Klebestelle fixiert. Eine zweite Klebestelle 136 fixiert den Aktivkohlebalg 112. Die zweite Klebestelle 136 ist ebenfalls im Innenraum des Innenraumluftfilterelements 100 angeordnet, und zwar an der dem Außenbereich nächsten Bereich der Stufe 132. Die Klebestellen 134 und 136 können, wie dargestellt, einander benachbart ausgeführt sein. Alternativ können die Klebestellen 134 und 136 auch als eine Klebestelle ausgestaltet sein. Eine weitere Klebestelle 138 kann optional vorgesehen sein. Diese fixiert den Vorfilter 110. Sollte diese Klebestelle 138 entfallen, muss der Vorfilter 110 mit dem Aktivkohlebalg 112 vor Einbringen verbunden werden.

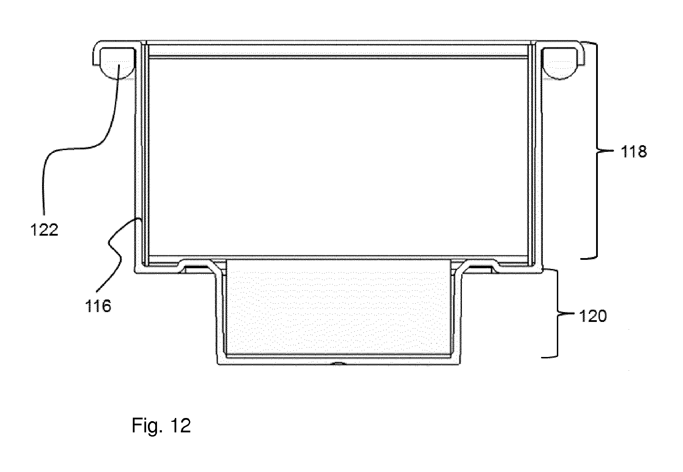

Figur 12 zeigt eine Variante einer Anordnung der umlaufenden Dichtung 122, die hier außen an der Wandung des ersten Bereichs 118 an dessen vom zweiten Bereich 120 abgewandten Ende und axial in Richtung des zweiten Bereichs 120 wirkend angeordnet ist.

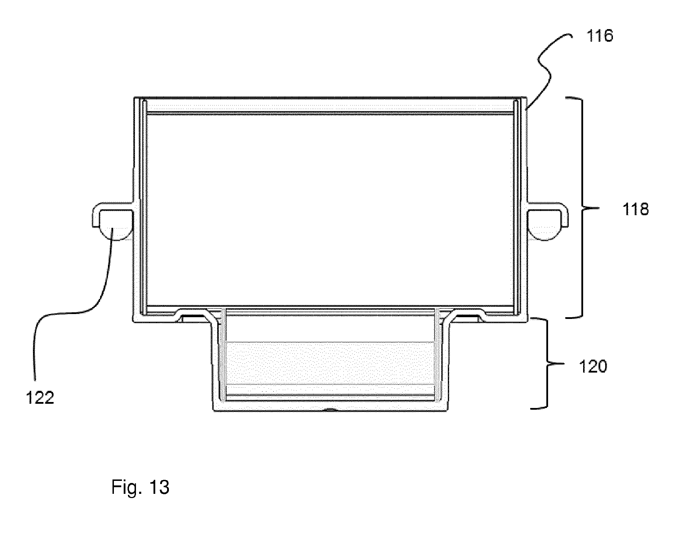

Figur 13 zeigt eine Variante einer Anordnung der umlaufenden Dichtung 122, die hier außen und mittig an der Wandung des ersten Bereichs 118 und axial in Richtung des zweiten Bereichs 120 wirkend angeordnet ist.

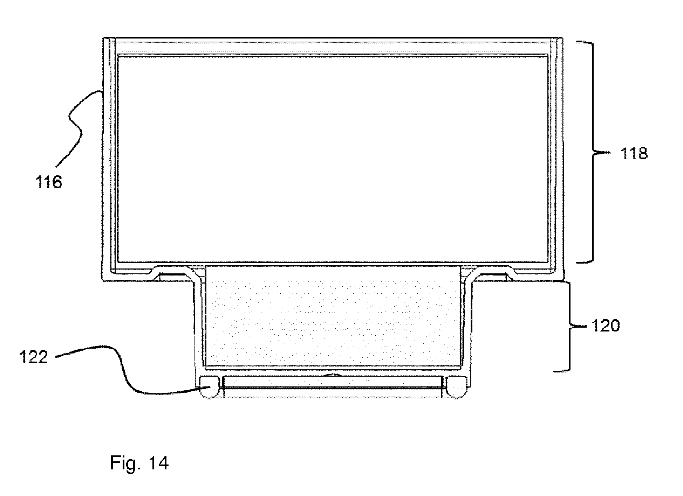

Figur 14 zeigt eine Variante einer Anordnung der umlaufenden Dichtung 122, die hier axial am vom ersten Bereich 118 abgewandten Ende des zweiten Bereichs 120 weg weisend und umlaufend um die Strömungsendfläche des zweiten Bereichs 120 angeordnet ist.

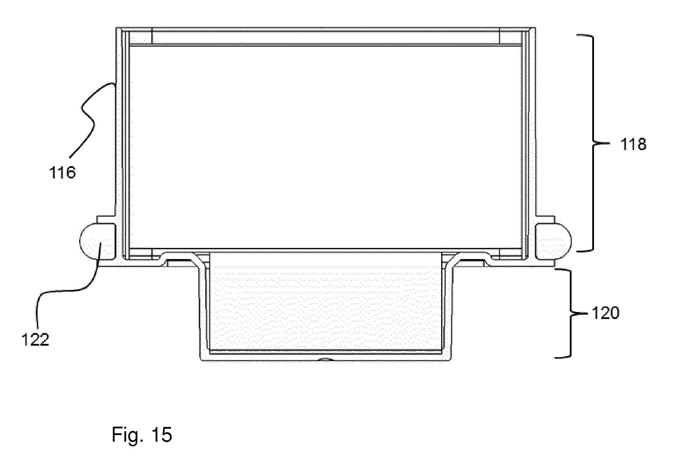

Figur 15 zeigt eine Variante einer Anordnung der umlaufenden Dichtung 122, die hier außen an der Wandung des ersten Bereichs 118 an dessen dem zweiten Bereich 120 zugewandten Ende und radial wirkend angeordnet ist.

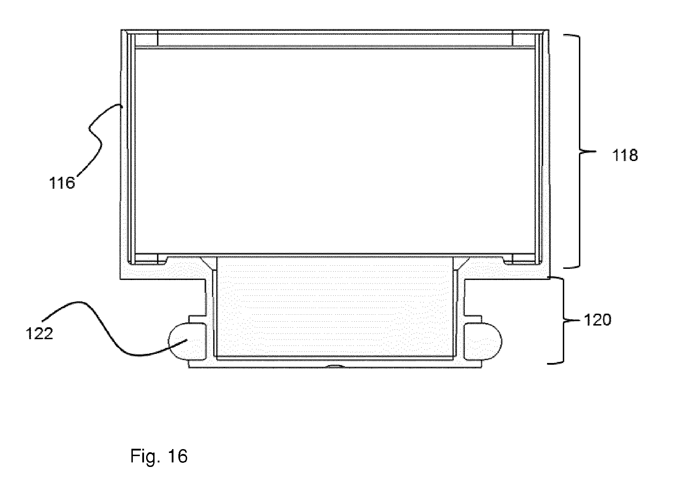

Figur 16 zeigt eine Variante einer Anordnung der umlaufenden Dichtung 122, die hier außen an der Wandung des zweiten Bereichs 120 an dessen dem ersten Bereich 120 abgewandten Ende und radial wirkend angeordnet ist.

In Bezug auf Ausführungsdetails des Filtermedienaufbaus wird ferner auf die DE102013011457 A1 der Anmelderin verwiesen, die analog für die vorliegende Anmeldung Verwendung finden kann.

## Patentansprüche

1. Innenraumluftfilterelement (100) für einen Innenraumluftfilter für die Fahrerkabine von Land- und Arbeitsmaschinen, insbesondere mit Spritz- oder Sprühvorrichtungen für Pflanzenschutz- oder Düngemittel, umfassend
einen Filterelementrahmen (116),
eine Vorfilterlage (110),
eine Adsorptionsfilterlage (112),
eine Feinfilterlage (114) insbesondere zur Abscheidung von Aerosolen,
wobei die Filterlagen im Wesentlichen entlang einer Strömungsrichtung durchströmt werden, **dadurch gekennzeichnet, dass** der Filterelementrahmen (116) aufweist:
einen ersten Bereich (118) mit einer ersten effektiven Querschnittsfläche senkrecht zur Strömungsrichtung und
einen zweiten Bereich (120) mit einer zweiten effektiven Querschnittsfläche senkrecht zur Strömungsrichtung, wobei die zweite effektive Querschnittsfläche nur einen Teil der ersten effektiven Querschnittsfläche beträgt, sowie eine umlaufende Dichtung (122) zur Trennung der Rohseite von der Reinseite im eingebauten Zustand.

2. Innenraumluftfilterelement (100) nach Anspruch 1, **dadurch gekennzeichnet, dass** der erste Bereich (118) geometrisch stromaufwärts der Dichtung (122) und der zweite Bereich (120) geometrisch stromabwärts der Dichtung (122) angeordnet sind.

3. Innenraumluftfilterelement nach Anspruch 1 oder 2, **dadurch gekennzeichnet, dass** die Vorfilterlage (110) und die Adsorptionsfilterlage (112) in dem ersten Bereich (118) und die Feinfilterlage (114) in dem zweiten Bereich (120) angeordnet sind oder alternativ die Vorfilterlage (110), die Feinfilterlage (115) und eine erste Adsorptionsfilterlage (117) in dem ersten Bereich (118) und eine zweite Adsorptionsfilterlage (119) in dem zweiten Bereich (120) angeordnet sind.

4. Innenraumluftfilterelement nach einem der Ansprüche 1, 2 oder 3, **dadurch gekennzeichnet, dass** die Vorfilterlage (110) eine Partikelfilterlage, die Adsorptionsfilterlage (112, 117, 119) eine Aktivkohlelage und/oder die Feinfilterlage (114, 115) eine HEPA-Filterlage sind.

5. Innenraumluftfilter nach einem der vorhergehenden Ansprüche, **dadurch gekennzeichnet, dass** der zweite Bereich (120) des Filterelementrahmens (116) derart ausgebildet ist, im eingebauten Zustand in einen stromabwärts angeordneten Ansaugluftkanal (130) zu ragen.

6. Innenraumluftfilterelement nach Anspruch 5, **dadurch gekennzeichnet, dass** die Längenausdehnung der zweiten effektiven Querschnittsfläche in einer ersten Richtung und die Längenausdehnung der zweiten effektiven Querschnittsfläche in einer zweiten Richtung senkrecht zur ersten Richtung um mindestens die Wandstärke eines Luftkanalelements verglichen mit der jeweils entsprechenden Längenausdehnung der ersten effektiven Querschnittsfläche reduziert ist.

7. Innenraumluftfilterelement nach einem der vorhergehenden Ansprüche, **dadurch gekennzeichnet, dass** der Filterelementrahmen (116) am Übergang von dem ersten Bereich (118) zu dem zweiten Bereich (120) stufenförmig (132) ausgebildet ist.

8. Innenraumluftfilterelement nach Anspruch 7, **dadurch gekennzeichnet, dass** die Dichtung (122) an einer Kante im äußeren Bereich der Stufe (132), insbesondere außerhalb der effektiven Querschnittsfläche des ersten Bereichs (118), angeordnet ist.

9. Innenraumluftfilterelement nach Anspruch 8, **dadurch gekennzeichnet, dass** die Dichtung (122) im Bereich der Stufe innerhalb der effektiven Querschnittsfläche des ersten Bereichs angeordnet ist.

10. Innenraumluftfilterelement nach einem der Ansprüche 7 bis 9, **dadurch gekennzeichnet, dass** im Innenbereich der Stufe (132) eine gemeinsame Klebestelle zur Fixierung der Filterlagen des ersten Bereichs (118) und des zweiten Bereich (120) oder zwei aneinander angrenzende getrennte Klebestellen (134, 136) vorgesehen sind.

11. Innenraumluftfilterelement nach einem der vorhergehenden Ansprüche, **dadurch gekennzeichnet, dass** der Filterelementrahmen (116) einteilig, insbesondere als Spritzgussteil, ausgebildet ist.

12. Innenraumluftfilterelement nach einem der vorhergehenden Ansprüche, **dadurch gekennzeichnet, dass** Vorfilterlage (110), Adsorptionsfilterlage (112) und Feinfilterlage (114) jeweils dichtend und bevorzugt fest mit dem Filterelementrahmen (116) verbunden sind.

13. System zur Innenraumluftfilterung einer Fahrerkabine von Land- und Arbeitsmaschinen, insbesondere mit Spritz- oder Sprühvorrichtungen für Pflanzenschutz- oder Düngemittel, umfassend ein Innenraumluftfiltergehäuse sowie ein in das Innenraumluftfiltergehäuse einbaubares Innenraumluftfilterelement nach einem der Ansprüche 1 bis 12.
